Europäisches Patentamt

European Patent Office

Office européen des brevets

(11) Veröffentlichungsnummer: **0 333 699**
**A1**

## (12) EUROPÄISCHE PATENTANMELDUNG

(21) Anmeldenummer: **89890071.7**

(22) Anmeldetag: **14.03.89**

(51) Int. Cl.⁴: **B 23 B 3/06**

(30) Priorität: **14.03.88 AT 688/88**

(43) Veröffentlichungstag der Anmeldung:
**20.09.89 Patentblatt 89/38**

(84) Benannte Vertragsstaaten: **CH DE GB IT LI**

(71) Anmelder: **MASCHINENFABRIK HEID**
**AKTIENGESELLSCHAFT**
**Ernstbrunner Strasse 31**
**A-2000 Stockerau (AT)**

(72) Erfinder: **Holy, Franz**
**Dr. Adolf-Schärfstrasse 3**
**A-2000 Stockerau (AT)**

**Mang, Heinz**
**Witthauergasse 3**
**A-1180 Wien (AT)**

(74) Vertreter: **Müllner, Erwin, Dr. et al**
**Patentanwälte Dr. Erwin Müllner Dipl.-Ing. Werner**
**Katschinka Postfach 159 Weihburggasse 9**
**A-1010 Wien (AT)**

(54) **Mittenantriebsdrehmaschine.**

㉗ Bei einer Mittenantriebsdrehmaschine mit einem mittig angeordneten Spindelstock (2) und mit Schlittensystemen (4, 5) zu beiden Seiten desselben erfolgt die Abdeckung der Bettführungen sowie der Spindeln durch Teleskopbleche (6), die von dem einen Schlittensystem (4) zu dem anderen Schlittensystem (5) in Form eines Blechpaketes durchgehen und am dem Spindelstock (2), insbesondere in einer Ausnehmung desselben, vorbeiführen. Dadurch können die Teleskopbleche (6) hinter dem Spindelstock (2) zusammengeschoben werden und engen den Arbeitsbereich der Schlittensysteme (4, 5) nicht ein. Dabei erfolgt die Einleitung des Drehmomentes von einem Hauptantrieb (13, 13') in den Spindelstock (2) unterhalb der Bettführungen kollisionsfrei mit den Teleskopblechen (6) durch eine Ausnehmung oder einen Durchbruch (11) durch das Maschinenbett (1) hindurch.

*Fig. 1*

EP 0 333 699 A1

# Beschreibung

## Mittenantriebsdrehmaschine

Die Erfindung betrifft eine Mittenantriebsdrehmaschine mit einem auf einem Maschinenbett, insbesondere in dessen Längsmitte angeordneten Spindelstock und mit je einem Schlittensystem auf Bettführungen zu beiden Seiten des Spindelstockes und mit Teleskopblechen, die die Bettführungen abdecken.

Im Gegensatz zu herkömmlichen Werkzeugmaschinen mit Spindelstock an dem einen Bettende und Reitstock an dem anderen Bettende, liegt der Spindelstock bei Mittenantriebsdrehmaschinen in Bettmitte und an beiden Bettenden kann sich jeweils ein Reitstock befinden. Die klassische Werkzeugmaschine ist somit zur Bearbeitung des Werkstückes zwischen den Werkstückenden geeignet, während das Werkstück auf einer Mittenantriebsdrehmaschine in seinem Mittelteil eingespannt ist, sodaß beide Werkstückenden gleichzeitig einer Bearbeitung unterzogen werden können. Dazu verfügt die Mittenantriebsdrehmaschine auch über mindestens je ein Schlittensystem zu beiden Seiten des Spindelstockes. Produktionsmaschinen dieser Bauart werden meist als Schrägbettmaschinen ausgebildet. Die DE-PS 36 20 231 betrifft darüber hinaus eine Mittenantriebsmaschine mit zwei getrennten Spindelstöcken für die Aufnahme und den Antrieb des Werkstückes im Mittelbereich eines Maschinenbettes und jeweils einen Werkzeugschlitten in jeder Hälfte des Maschinenbettes. Die Bettführungen zu beiden Seiten des Spindelstockes sollen gegen Spänefall abgedeckt werden. Dazu dienen Teleskopbleche, die bei den meisten der bekannten Ausführungsformen den Bereich zwischen Schlitten und Spindelstock schützen. Die FR-PS 25 57 483 zeigt Teleskopbleche dieser Art auf mehreren Bettführungen. Wenn ein Schlittensystem für eine Bearbeitung nahe an den Spindelstock herangefahren wird, dann schieben sich die Bleche zusammen. Es bildet sich ein Blechpaket zusammengeschobener Teleskopbleche mit einer gewissen Gesamtbreite, die den Minimalabstand zwischen Schlitten und Spindelstock bestimmt. Eine Bearbeitung in dieser Zone des Werkstückes ist nicht möglich. Man ist natürlich interessiert, die Bearbeitung möglichst nahe an die Einspannungen im Spindelstock heranzuführen und hat daher die Breite der Teleskopbleche verkleinert, sodaß die Gesamtbreite eines vollständig zusammengeschobenen Blechpaketes möglichst klein wird und daher näher an die Einspannung des Spindelstockes herangearbeitet werden kann. Eine Verkleinerung der Breite der Einzelbleche führt zu einer Vergrößerung der Anzahl der Bleche bei gleicher abzudeckender Länge der Bettführungen und damit zu einer Vervielfältigung der Dichtflächen zwischen den Teleskopblechen. Gleichzeitig damit stellen sich bei besonders schmalen aber langen Blechen Parallelführungsprobleme ein. Die schmalen Teleskopbleche neigen zum Verspießen und Verklemmen.

Die Erfindung zielt darauf ab, eine Teleskopabdeckung der Bettführungen bei Mittenantriebsdrehmaschinen so auszubilden, daß einerseits breite Einzel-Teleskopbleche verwendet werden können, die in der Funktion innerhalb des Blechpaketes unkritisch sind und daß dennoch anderseits keinerlei Einschränkung bei der Bearbeitungslänge in Kauf genommen werden muß, also eine Bearbeitung ohne Rücksicht auf ein eventuell verbleibendes Blechpaket bis an die Einspannung des Spindelstokkes heran erfolgen kann. Dies wird bei einer Mittenantriebsdrehmaschine der eingangs beschriebenen Art dadurch erreicht, daß die Teleskopbelche also ein von dem einem Schlittensystem zu dem anderen Schlittensystem durchgehendes Blechpaket ausgebildet sind, das an dem Spindelstock, insbesondere zwischen Spindelstock und den Bettführungen in einer Ausnehmung des Spindelstokkes, vorbeiführt. Während also bisher zwei Blechpakete, jeweils zwischen einem Schlittensystem und dem Spindelstock vorgesehen waren, wird nunmehr ein einziges von einem Schlitten zum anderen Schlitten hinter dem Spindelstock durchgehendes Blechpaket verwendet. Die Bettführungen erstrekken sich in aller Regel über die gesamte Breite des Maschinenbettes. Der Spindelstock wird daher so ausgebildet, daß er einen freien Durchgang der Teleskopbleche längs der Bettführungen ermöglicht. Es können demnach Teleskopbleche beispielsweise in einer Breite entsprechend der Breite des Spindelstockes verwendet werden, da das gesamte Blechpaket im völlig zusammengeschobenem Zustand bei beidseitigen Bearbeitungen unmittelbar nächst der Einspannung hinter dem Spindelstock Platz findet. Die Teleskopbleche bzw. das Blechpaket beeinflußt bzw. schränkt die Bearbeitung nunmehr in keiner Weise ein. Durch die nun auch ausführbare große Breite der Teleskopbleche gibt es keinerlei Parallelführungsprobleme. Außerdem nimmt die Zahl der gegenseitigen Dichtungsfugen ab.

Infolge der durchgehenden Anordnung der Teleskopbleche ist es zweckmäßig, wenn im Maschinenbett unterhalb der von den Teleskopblechen durchgehend abgedeckten Bettführungen mindestens eine Ausnehmung oder ein Durchbruch für einen an der Maschinenrückseite angeordneten Hauptanstrieb vorgesehen ist. Das Drehmoment kann dadurch kollisionsfrei gegenüber den Teleskopblechen über tragen werden. Der Eintrieb erfolgt an tiefer Stelle durch das Maschinenbett. Dies ist schwingungstechnisch wesentlich günstiger als bei der dem Stand der Technik entsprechenden hohen Lage der Riementriebe. Besonders zweckmäßig ist es, wenn die Welle des Hauptantriebs parallel zur Maschinenhauptachse angeordnet ist und zur Übertragung des Drehmomentes durch die Ausnehmung bzw. den Drehbruch im Maschinenbett hindurch ein Riemenantrieb sowie Zahnräder vorgesehen sind. In einer anderen Ausführungsform ist vorgesehen, daß die Welle des Hauptantriebes normal zur Maschinenhauptachsenrichtung angeordnet ist und zur Übertragung des Drehmomentes durch die Ausnehmung bzw. den Durchbruch des Maschinenbettes hindurch eine Welle sowie im Spindelstock ein Winkelgetriebe vorgesehen sind. Die erfindungsgemäße spezielle Anordnung des Teleskopbleche ist somit unmittelbar mit dem Eintrieb bzw. der Drehmomenüübertragung vom Hauptantrieb zum Spindelstock verknüpft.

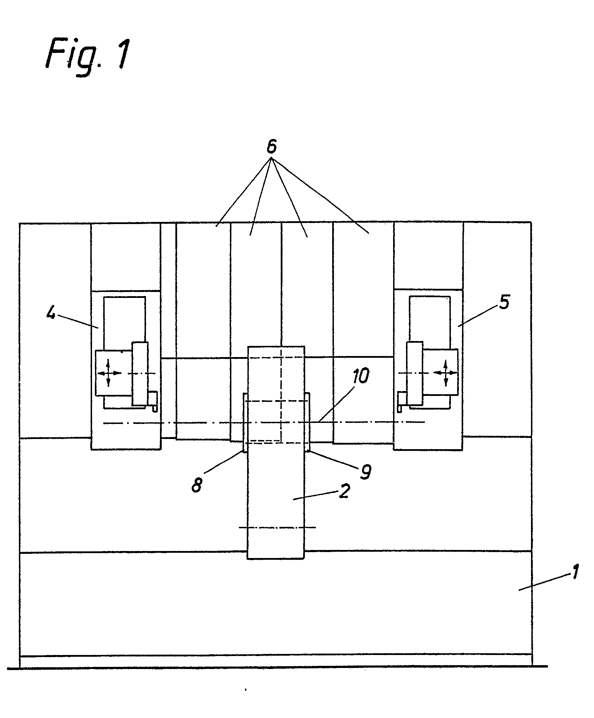

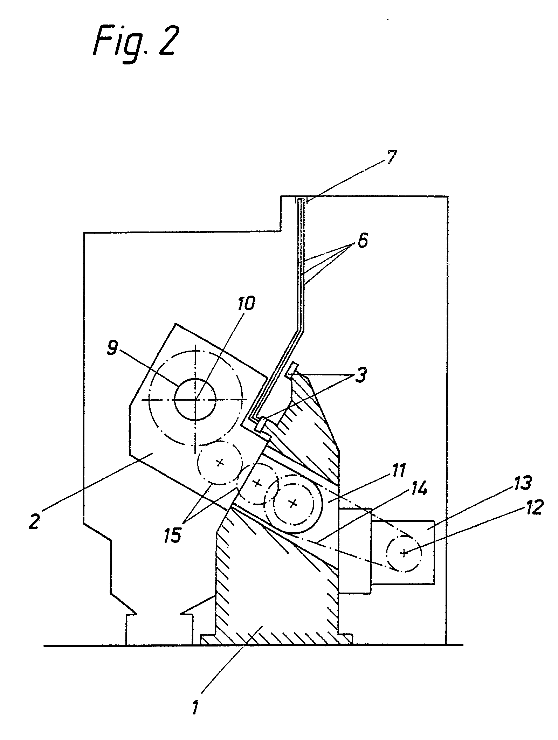

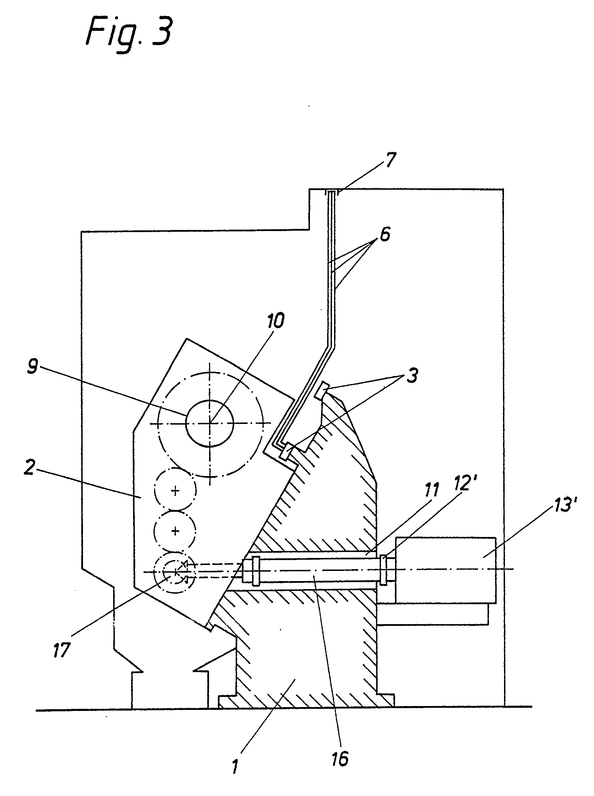

Ausführungsbeispiele des Erfindungsgegenstandes sind in den Zeichnungen dargestellt. Fig. 1 zeigt eine Ansicht einer Mittenantriebsdrehmaschine in schematischer Darstellung von der Bearbeitungsseite gesehen, Fig. 2 einen Querschnitt durch eine Maschine nach Fig. 1 mit einer Drehmomentübertragung vom Hauptantrieb mittels Riementrieb und Fig. 3 eine alternative Ausführungsform zu Fig. 2 mittels Welle und Winkelgetriebe.

Eine Mittenantriebsdrehmaschine in Schrägbettausführung umfaßt gemäß Fig. 1 bis 3 auf einem Maschinenbett 1 einen in der Längsmitte angeordneten Spindelstock 2 und zu beiden Seiten desselben auf Bettführungen 3 verfahrbare Schlittensysteme 4, 5. Reitstöcke jeweils an den Enden der Bettführungen 3 bzw. der Maschinenbettes können vorgesehen sein. Um die Bettführung 3 sowie die Spindeln im Bereich der Bettführungen vor dem bei spanabhebender Bearbeitung auftretenden Spänefall zu schützen, sind ineinandergreifende Teleskopbleche 6 vorgesehen, die die kritische Zone abdecken und in Führungen 7 laufen. Die Teleskopbleche 6 bilden ein Blechpaket, das teleskopartig zusammengeschoben und auseinandergezogen werden kann. Das erste sowie das letzte dieser Teleskopbleche 6 ist jeweils mit einem der Schlittensysteme 4, 5 verbunden. Dadurch ergibt sich ein am Spindelstock 2 vorbeiführendes, durchgehendes Blechpaket. Diese Ausführung ermöglicht ein unmittelbares Heranfahren der beiden Schlitten 4, 5 an den Spindelstock 2, sodaß eine Bearbeitung eines Werkstückes bis hin zur Einspannung 8, 9 im Spindelstock 2 erfolgen kann. Das zusammengeschobene Paket der Teleskopbleche 6 liegt dann hinter dem Spindelstock 2. Letzterer weist eine Ausnehmung auf, die einen freien Durchgang im Bereich der Bettführungen 3 ermöglicht.

Fig. 2 zeigt, daß eine Übertragung des Drehmomentes von einem hinter dem Maschinenbett liegenden Hauptantrieb zum Spindelstock in der Ebene der Maschinenhauptachse 10 oder darüber infolge der durchgehenden Anordnung der Teleskopbleche 6 nicht möglich ist. Es hat sich in Verbindung mit den neuen durchgehenden Teleskopabdeckungen als besonders zweckmäßig ergeben, eine Ausnehmung bzw. einen Durchbruch 11 im Maschinenbett 1 vorzusehen, der im Sockelbereich, also unterhalb der Bettführung 3 liegt und durch welchen hindurch die Übertragung des Drehmomentes erfolgt. Gegenüber einer Übertragung bzw. einem Eintrieb über Kopf hat diese Ausführung wesentliche schwingungstechnische Vorteile, weil im Maschinensockel wegen der großen ruhenden Masse eine starke Schwingungsdämpfung erfolgt.

In Fig. 2 liegt die Welle 12 des Hauptantriebes parallel zur Maschinenhauptachse. Die Übertragung des Drehmomentes zum Spindelstock 2 erfolgt hier über einen Riementrieb 14 und über Zahnräder 15.

Alternativ dazu zeigt Fig. 3 einen Hauptantrieb 13', dessen Welle 12' senkrecht zur Maschinenhauptachse 10 verläuft. Der Antrieb erfolgt ebenfalls durch die Ausnehmung bzw. den Durchbruch 11 hindurch mittels einer Welle 16 und ein Winkelgetriebe 17.

**Patentansprüche**

1. Mittenantriebsdrehmaschine mit einem auf einem Maschinenbett, insbesondere in dessen Längsmitte angeordneten Spindelstock und mit je einem Schlittensystem auf Bettführungen zu beiden Seiten des Spindelstocks und mit Teleskopblechen, die die Bettführungen abdekken, dadurch gekennzeichnet, daß die Teleskopbleche (6) als ein von dem einen Schlittensystem (4) zu dem anderen Schlittensystem (5) durchgehendes Blechpaket ausgebildet sind, das an dem Spindelstock (2), insbesondere zwischen Spindelstock (2) und den Bettführungen (3) in einer Ausnehmung des Spindelstocks (2), vorbeiführt.

2. Mittenantriebsdrehmaschine nach Anspruch 1, dadurch gekennzeichnet, daß im Maschinenbett (1) unterhalb der von den Teleskopblechen (6) durchgehend abgedeckten Bettführungen (3) mindestens eine Ausnehmung oder ein Durchbruch (11) für einen an der Maschinenrückseite angeordneten Hauptantrieb (13, 13') vorgesehen ist.

3. Mittenantriebsdrehmaschine nach Anspruch 2, dadurch gekennzeichnet, daß die Welle (12) des Hauptantriebs (13) parallel zur Maschinenhauptachse (10) angeordnet ist und zur Übertragung des Drehmomentes durch die Ausnehmung bzw. den Durchbruch (11) im Maschinenbett (1) hindurch ein Riementrieb (14) sowie Zahnräder (15) vorgesehen sind.

4. Mittenantriebsdrehmaschine nach Anspruch 2, dadurch gekennzeichnet, daß die Welle (12') des Hauptantriebs (13') normal zur Maschinenhauptachseinrichtung (10) angeordnet ist und zur Übertragung des Drehmomentes durch die Ausenhmung bzw. den Durchbruch (11) des Maschinenbettes (1) hindurch eine Welle (16) sowie im Spindelstock (2) ein Winkelgetriebe (17) vorgesehen sind.

# Fig. 1

# Fig. 2

# Fig. 3

Europäisches
Patentamt

# EUROPÄISCHER RECHERCHENBERICHT

Nummer der Anmeldung

| | EINSCHLÄGIGE DOKUMENTE | | EP 89890071.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE - C1 - 3 620 231 (EMAG MASCHINENFABRIK GMBH) <br> * Fig. 1,2,5 * <br> -- | 1,3 | B 23 B 3/06 |
| D,A | FR - A1 - 2 557 483 (INDUSTRIAS ROMI S.A.) <br> * Zusammenfassung * <br> ---- | 1 | |

RECHERCHIERTE SACHGEBIETE (Int Cl.4)

B 23 B 3/00
B 23 B 25/00
B 23 Q 11/00

Der vorliegende Recherchenbericht wurde für alle Patentansprüche erstellt.

| Recherchenort | Abschlußdatum der Recherche | Prüfer |
|---|---|---|
| WIEN | 23-05-1989 | BRÄUER |

EPA Form 1503 03 82